# EUROPEAN PATENT APPLICATION

(11) **EP 2 530 369 A1**
(43) Date of publication of application: **05.12.2012**
(21) Application number: 10843908.4
(22) Date of filing: 06.07.2010
(51) Int. Cl.: F21S 2/00, F21Y 103/00

(54) **SIMULATED SOLAR LIGHT IRRADIATION DEVICE AND SIMULATED SOLAR LIGHT IRRADIATION METHOD**

(30) Priority: 25.01.2010 JP 2010013196
(71) Applicant: Sharp Kabushiki Kaisha, Osaka-shi, Osaka 545-8522 (JP)
(72) Inventor: IDEN, Tamon, Osaka-shi, Osaka 545-8522 (JP); MINAMI, Kohji, Osaka-shi, Osaka 545-8522 (JP)
(74) Representative: Müller - Hoffmann & Partner
(86) International application number: PCT/JP2010/061477
(87) International publication number: WO 2011/089744

(57) **Abstract**

A simulated solar light irradiation device (30) includes (i) a light source section including a first light source (1) and a second light source (2), (ii) light selection means (7) for selecting and emitting (a) light, having shorter-wavelengths than a predetermined boundary wavelength, in first light irradiated by the first light source (1) and (b) light, having longer-wavelengths than the predetermined boundary wavelength, in second light irradiated by the second light source (2), and (iii) control means (5, 6) for controlling a directivity of the first light or a directivity of the second light so that the first light or the second light enters the light selection means (7) at a predetermined incident angle. In this way, it is possible to irradiate designed simulated solar light without increasing a size of the device.

## Description

### Technical Field

The present invention relates to a simulated solar light irradiation device to irradiate simulated solar light, and to a simulated solar light irradiation method.

### Background Art

In recent years, demands for a device which can irradiate artificial light (simulated solar light) similar to solar light have been increasing, in parallel with large-sized solar battery panels. Especially, in tandem with rapid development and penetration of solar battery technology, a device has been especially demanded which (i) can irradiate a large area with high accurate simulated solar light and (ii) is usable for inspection, measurement and experiment of solar batteries.

A main requirement which such simulated solar light should meet is that the simulated solar light should have an emission spectrum similar to that of standard solar light which is set by the Japanese Industrial Standards (JIS). Technology which is designed to meet the requirement is disclosed in Patent Literatures 1 to 3.

Patent Literature 1 discloses a simulated solar light irradiation device (solar simulator) provided with (i) at least two light sources and (ii) at least one wavelength-dependent mirror that selectively transmits or reflects the light, which is emitted by each of the at least two light sources each having a different wavelength range, so as to extract or mix at least transmitted light and reflected light. With the device, it is possible, by appropriately combining the at least two light sources, to generate spectra similar to the standard solar light.

Patent Literature 2 discloses, as a conventional art, a simulated solar light irradiation device including at least two light sources, an elliptic mirror which converges each light from the at least two light sources, a superposed filter and a spectral correction filter, and a half-mirror. With the device, it is possible, by superposing light with a predetermined wavelength, to generate spectra similar to those of the standard solar light.

Patent Literature 3 discloses a simulated solar light irradiation device including a xenon short arc lamp, a reflecting mirror, an air mass filter, a bright line cut filter, and an integral optical system. With the device, adjusting a position of the bright line cut filter makes it possible to adjust a cut amount of bright line spectral components. As such, it is possible to prepare simulated solar light which is similar to the standard solar light. The bright line cut filter is an optical filter that eliminates bright line spectral components of a specified wavelength so as to attain light close to standard solar light.

### Citation List

Patent Literature 1
   Japanese Patent Application Publication, Tokukaihei, No. 8-235903 (1996) (Publication Date: September 13, 1996)
Patent Literature 2
   Japanese Patent Application Publication, Tokukaihei, No. 4-133017 (1992) (Publication Date: May 7, 1992)
Patent Literature 3
   Japanese Patent Application Publication, Tokukaihei, No. 9-306201 (1997) (Publication Date: November 28, 1997)

### Summary of Invention

### Technical Problem

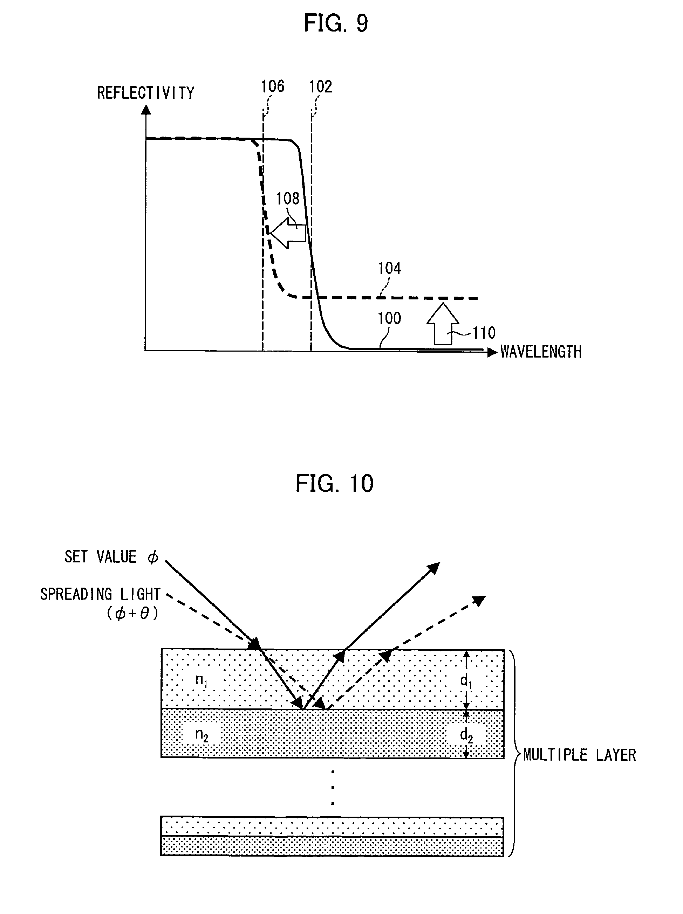

However, the technology disclosed in the Patent Literature 1 causes a problem that simulated solar light cannot be achieved as designed. Factors causing such a problem are described below with reference to Figs. 9 through 11.

Fig. 9 illustrates a spectrum of reflectivity of a wavelength selection mirror (wavelength-dependent mirror) included in a simulated solar light irradiation device in accordance with a conventional technology. In Fig. 9, a reference numeral 100 indicates a designed spectrum of light reflectivity of the wavelength selection mirror. The designed spectrum 100 has a limit wavelength 102.

Fig. 10 illustrates a structure of a general wavelength selection mirror. Strictly speaking, the wavelength selection mirror makes use of a complex physical phenomenon in which reflection and transmission in each layer are repeated. However, the following description will discuss a simplified model, in which an optical path length L occurring during reflection by an uppermost layer is used. The optical path length L is expressed in Formula 1, where n1 and d1 respectively indicate a refractive index and a thickness of the uppermost thin layer, and Φ and θ indicate an incident angle and a spread angle, respectively.

Formula 1 L=2d1/cos{sin⁻¹[sin(Φ±θ)/n1]}

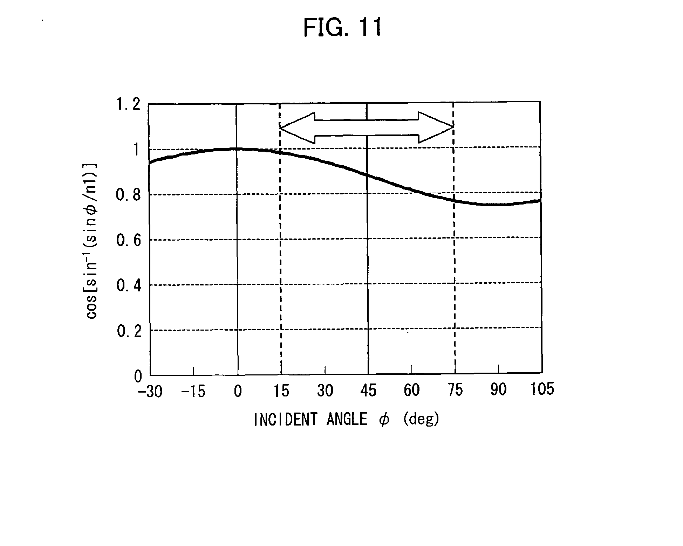

Fig. 11 illustrates a relation existing between the denominator in Formula 1 and the incident angle. The following description discusses, for example, a case where light enters a light selection means at a designed incident angle of 45°. As is clear from Fig. 11, light emitted from the light source has a spread angle because it is diffused by an emission surface. Accordingly, even in a case where the light is designed to enter the wavelength selection mirror at an incident angle of 45°, the light, in fact, will enter the wavelength selection mirror at an incident angle of (45° ± 30°). When comparing a first situation in which the light enters the wavelength selection mirror at an incident angle of 45° and a second situation in which the light enters the wavelength selection mirror at an incident angle of 75°, the optical path length L is affected more adversely in the second situation than in the first situation. This is because the denominator in Formula 1 becomes smaller in the second situation than in the first situation. In other words, since the optical path length is more sensitive in the second situation than in the first situation, it is harder to cause the wavelength selection mirror to have designed characteristics in the second situation.

The light emitted from the light source thus enters the wavelength selection mirror at an angle which is a summation of an incident angle and a constant spread angle. As such, the spectrum of light reflectivity corresponding to a case where the light enters at an angle deviating from an incident angle of 45°, shifts toward a long-wavelength side. This causes a change in reflectivity (see, for example, a reference numeral 102 shown in Fig. 9). Specifically, a designed boundary wavelength 102 (intended value) shifts to a boundary wavelength 106 illustrated in Fig. 9 (see an arrow 108). Further, a reflectivity of light, whose wavelength is longer than the actual boundary wavelength, increases more greatly than the designed reflectivity (see an arrow 110 shown in Fig. 9). The above problems become more salient as the angle of incident light becomes greater. The above problems also become more salient in a case where the spread of the incident light is great. According to the device disclosed in Patent Literature 1, the light reflectivity of the wavelength selection mirror will never have a designed reflectivity. As such, there will occur a problem that the emission spectrum of simulated solar light to be irradiated will not become designed emission spectra either.

In Patent Literature 2, light having no spread angle (parallel light) enters a half-mirror (wavelength selection mirror). However, if the simulated solar light irradiation device disclosed as the conventional art in Patent Literature 2 is implemented, then an increase in size of the light sources is brought about. Furthermore, in order to cause the light emitted from the light sources to be parallel light, it becomes necessary to lengthen a distance between the emission surface and the respective light sources. This causes the device itself to be large-sized.

In Patent Literature 3, although optical filters such as an air mass filter and a bright line cut filter are used, only a xenon light source is used as light source to generate simulated solar light. As such, it is not possible to cause the simulated solar light irradiation device to fully be similar to the standard solar light, even if bright lines are appropriately adjusted. Further, similarly to Patent Literature 2, the simulated solar light irradiation device itself will increase in size in a case of preparing a large-area solar battery.

Accordingly, with the conventional devices, in a case of causing parallel light to enter the wavelength selection mirror so that the wavelength selection mirror has the designed reflectivity, there occurs an increase in the size of each of the conventional devices. Further, in a case of attempting to reduce the size of each of the conventional devices, there occurs a problem that, because the light which entered the wavelength selection mirror has a spread angle, it is not possible that the wavelength selection mirror does not have the designed spectrum of the simulated solar light. As a result, there occurs a deterioration in a degree of conformity with the spectrum of the standard solar light set by the Japanese Industrial Standards, and therefore there occurs a deterioration in performance which a simulated solar light irradiation device should have.

The present invention is attained in view of the problems. An object of the invention is to provide a simulated solar light irradiation device and a simulated solar light irradiation method each of which irradiates an irradiation surface having a large area with designed simulated solar light, without increasing its size.

### Solution to Problem

In order to solve the problems, a simulated solar light irradiation device in accordance with the present invention irradiates simulated solar light by causing light selection means to combine (i) first light which is irradiated by a first light source and has a predetermined spectral distribution and (ii) second light which is irradiated by a second light source and has a spectral distribution different from that of the first light, so as to prepare the simulated solar light, the first light or the second light being given a directivity so as to control an incident angle of the first light or the second light that enters the light selection means at a predetermined incident angle.

With the configuration, the simulated solar light irradiation device causes the light selection means to combine (i) first light which is irradiated by a first light source and has a predetermined spectral distribution (for example, light having plenty of shorter-wavelengths than a predetermined boundary wavelength) and (ii) second light which is irradiated by a second light source and has a spectral distribution different from that of the first light (for example, light having plenty of longer-wavelengths than a predetermined boundary wavelength), so as to prepare the simulated solar light. Because the first light or the second light have the respective directivities, the first light and the second light have no diffused angle (i.e. the first light and the second light are parallel lights). Accordingly, it is possible for the first light or the second light to enter the light selection means at a predetermined incident angle. The predetermined incident angle is, for example, 45°. In this case, it becomes easy to design the light selection means.

With the above, it is possible for the first light and the second light to enter the light selection means at a predetermined incident angle. As such, it is possible to select (combine) the first light and the second light, as designed. The simulated solar light irradiation device in accordance with the present invention therefore makes it possible to generate the simulated solar light as designed.

Further, in order to solve the problems, another simulated solar light irradiation device in accordance with the present invention includes a light source section including first and second light sources; light selection means for selecting and emitting (i) light, having shorter-wavelengths than a predetermined boundary wavelength, in the first light irradiated by the first light source and (ii) light, having longer-wavelengths than a predetermined boundary wavelength, in the second light irradiated by the second light source; and control means for controlling a directivity of the first light or a directivity of the second light so that the first light or the second light enters the light selection means at a predetermined incident angle.

With the configuration, the control means for controlling the directivity of the first light and the directivity of the second light is provided between the light source section and the light selection means. This makes it possible to (i) control the directivities by use of a compact optical system and (ii) cause the first light or the second light to enter the light selection means at a predetermined incident angle.

This causes a reduction in the distance between the light source and the light selection means, as compared to conventional simulated solar light irradiation devices, and it is thus possible to reduce a size of the simulated solar light irradiation device.

Further, in order to solve the problems, a simulated solar light irradiation method in accordance with the present invention comprises the steps of: irradiating (i) first light, emitted from a first light source, whose directivity has been controlled and (ii) second light, emitted from a second light source, whose directivity has been controlled; and selecting and irradiating (i) light, having shorter-wavelengths than a predetermined boundary wavelength, in the first light and (ii) light, having longer-wavelengths than a predetermined boundary wavelength, in the second light.

With the method, the directivities of the first and second light emitted from the respective first and second light sources are controlled, and then the first and second light thus controlled are irradiated. As such, it is possible to select and irradiate (i) the light, having shorter-wavelengths than the predetermined boundary wavelength, in the first light and (ii) the light, having longer-wavelengths than the predetermined boundary wavelength, in the second light. It is therefore possible to obtain simulated solar light having an emission spectrum similar to that of the standard solar light. This brings about an effect of generating the simulated solar light, as designed.

### Advantageous Effects of Invention

As above, the simulated solar light irradiation device in accordance with the present invention brings about an effect of irradiating an irradiation surface, having a large area, with designed simulated solar light, without increasing its size.

### Brief Description of Drawings

Fig. 1

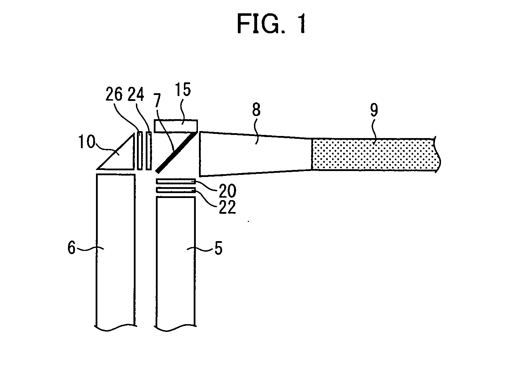

   Fig. 1 is a partially enlarged view of a simulated solar light irradiation device in accordance with an embodiment of the present invention.
Fig. 2

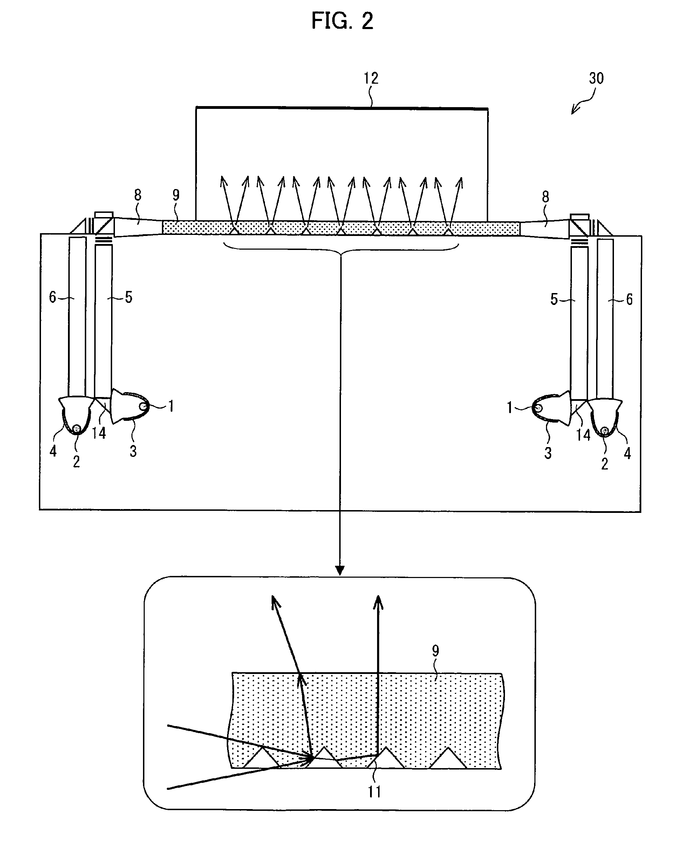

   Fig. 2 illustrates a relevant part of a structure of a simulated solar light irradiation device in accordance with an embodiment of the present invention.
Fig. 3

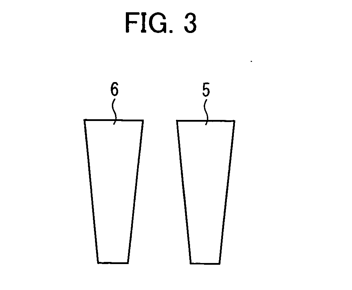

   Fig. 3 illustrates a structure of a taper coupler.
Fig. 4

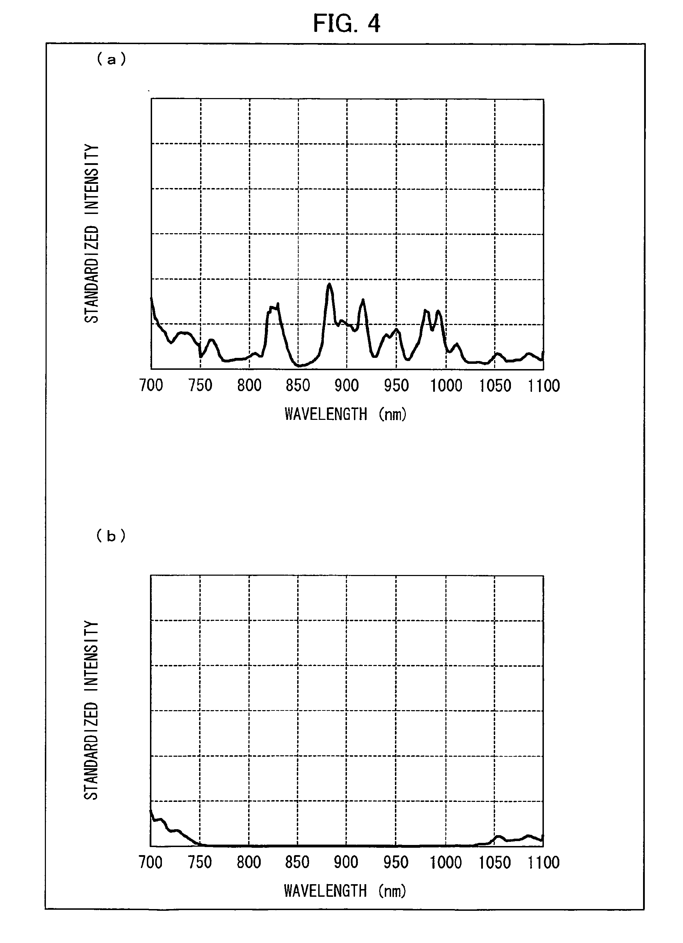

   Fig. 4 shows two spectra which can be obtained when using a xenon light source. (a) of Fig. 4 illustrates a case in which a sharp cut filter 22 was not provided; (b) of Fig. 4 illustrates a case in which a sharp cut filter 22 was provided.
Fig. 5

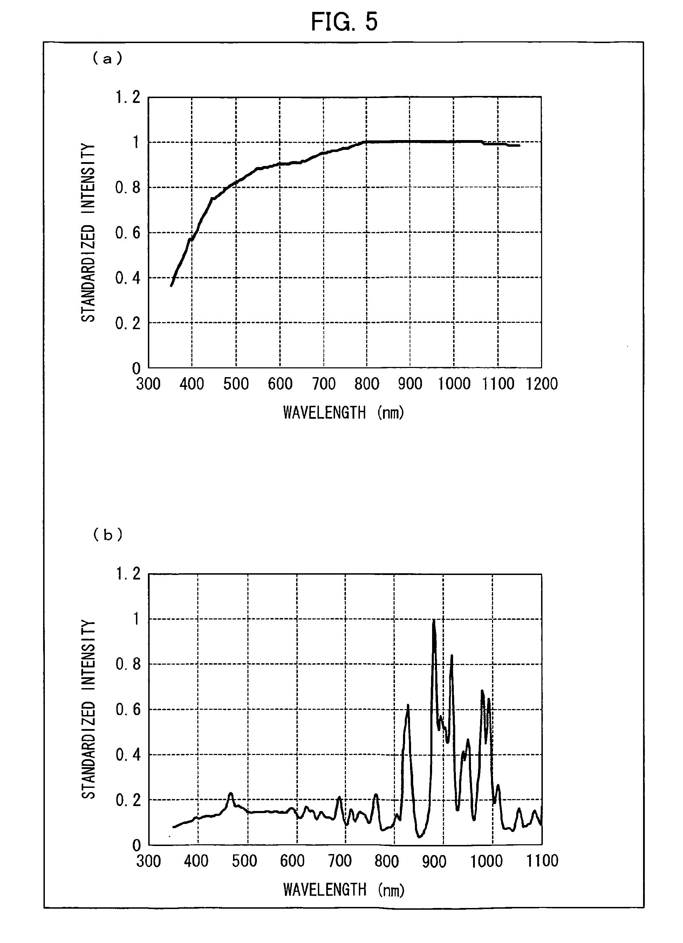

   Fig. 5 shows two emission spectral distributions. (a) of Fig. 5 illustrates a halogen light emission spectral distribution; (b) of Fig. 5 illustrates a xenon light emission spectral distribution.
Fig. 6

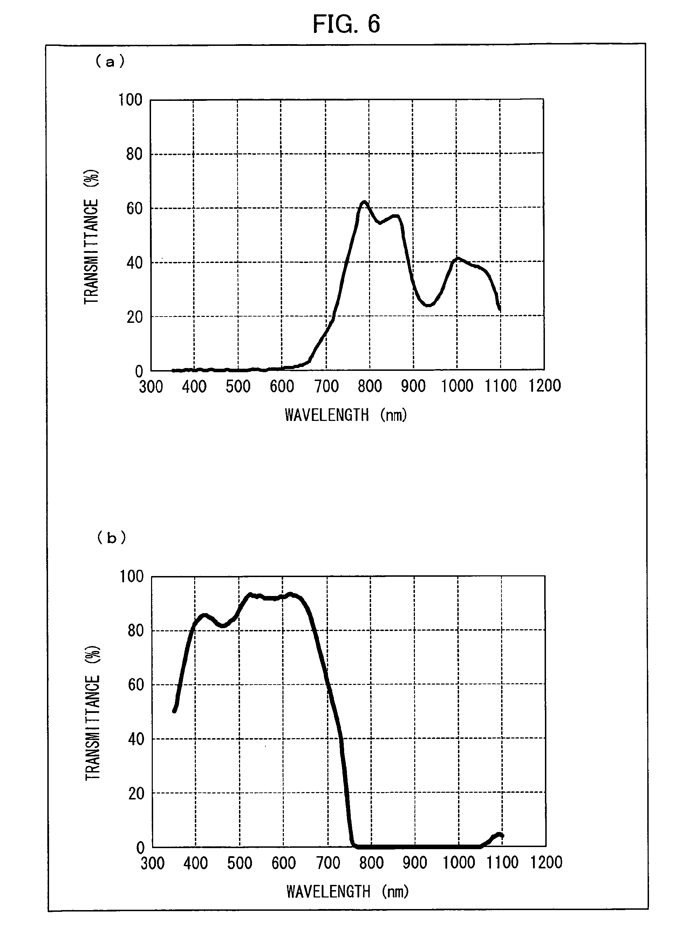

   Fig. 6 illustrates a transmittance of an optical filter. (a) of Fig. 6 illustrates transmittance of a second optical filter; (b) of Fig. 6 illustrates transmittance of a first optical filter.
Fig. 7

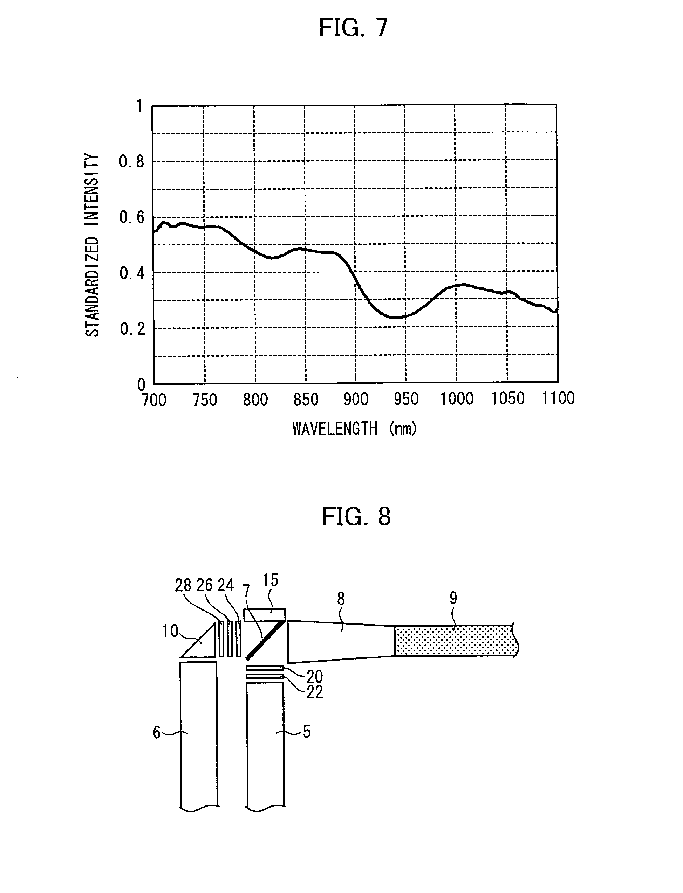

   Fig. 7 illustrates an emission spectrum of simulated solar light irradiated by a simulated solar light irradiation device in accordance with an embodiment of the present invention.
Fig. 8
   Fig. 8 is a partially enlarged view of a simulated solar light irradiation device in accordance with an embodiment of the present invention.
Fig. 9
   Fig. 9 is a graph illustrating a light transmittance of a wavelength selection mirror which a conventional solar simulator includes.
Fig. 10
   Fig. 10 illustrates a structure of a general wavelength selection mirror.
Fig. 11
   Fig. 11 illustrates an example of how a denominator of light path length L changes depending on an incident angle, in a top layer of the wavelength selection mirror.

### Description of Embodiments

The following description discusses an embodiment of the present invention, with reference to Figs. 1 through 8. The present embodiment deals in detail with a simulated solar light irradiation device 30 which irradiates an irradiation face 12 with simulated solar light. Simulated solar light is a type of artificial light. A simulated solar light irradiation device aims at having an emission spectrum infinitely similar to that of standard solar light which is set in the Japanese Industrial Standards. The simulated solar light irradiation device 30 of the present embodiment irradiates, as simulated solar light, composite light of a first light source and a second light source. A xenon light source, which generates light, having shorter-wavelengths, in the standard solar light, is for example used as the first light source. A halogen light source, which generates light, having longer-wavelengths, in the standard solar light, is for example used as the second light source. Further, a solar battery is for example disposed on the irradiation face.

### (Configuration of Simulated solar light irradiation device 30)

Fig. 2 illustrates a relevant part of a structure of the simulated solar light irradiation device 30 in the present embodiment of the present invention. Fig. 1 is a partially enlarged view of the simulated solar light irradiation device 30. As shown in Figs. 1 and 2, the simulated solar light irradiation device 30 includes: (i) a xenon light source 1 (a light source having a predetermined spectral distribution), serving as the first light source which irradiates first light; (ii) a halogen light source 2 (a light source having a spectral distribution different from that of the first light), serving as the second light source which irradiates second light different from the first light; (iii) a taper coupler 5 and a taper coupler 6, serving as control means, which control respective directivities of the first light irradiated by the xenon light source 1 and the second light irradiated by the halogen light source; (iv) a reflector 3 and a reflector 4 which converge the first light and the second light so as to cause the first light and the second light to efficiently (i.e. without leakage) enter the taper couplers 5 and 6, respectively; (v) a wavelength selection mirror 7, serving as light selection means, which selects and emits (a) light, having shorter-wavelengths than a predetermined boundary wavelength, in the first light irradiated by the first light source and (b) light, having longer-wavelengths than a predetermined boundary wavelength, in the second light irradiated by the second light source; (vi) a taper member 8 (light transmitting means); (vii) a light guiding plate 9 (light irradiating means); (viii) a reflecting mirror 10; (ix) a scattering groove 11 (light reflecting means); (x) a reflective mirror 15; (xi) air mass filters 20 and 24, serving as adjusting means, which adjust emission spectra of the respective first and second light; (xii) a sharp cut filter 22, serving as adjusting means, which adjust emission spectra of the respective first and second light; and (xiii) a heat ray cut filter 26, serving as adjusting means, which adjust emission spectra of the respective first and second light.

The xenon light source 1 is provided inside the reflector 3 and irradiates xenon light (the first light) having a predetermined emission spectrum. In the present embodiment, the xenon light source 1 is a stick-shaped (line-shaped) xenon lamp which extends in a depth direction perpendicular to a paper surface on which Fig. 2 is illustrated. One xenon light source 1 or a plurality of xenon light sources 1 can be provided. The reflector 3 has a bell-shaped cross section and converges light irradiated by the xenon light source 1 towards a light emission surface. A light reflecting member 14 is attached to the light emission surface of the reflector 3. The light reflecting member 14 is a type of prism, and reflects, in a substantially perpendicular direction, the light irradiated by the xenon light 1 so as to guide it to one end of the taper coupler 5.

In order to irradiate a large area with simulated solar light, it is necessary to prepare a high-output light source. Further, in order to reduce maintenance work such as replacement of the light sources in a case of introducing the device into a production line (in-process), it is necessary for the light sources to have a long operating life. In general, a xenon light source with high-output and long operating life is a stick-shaped diffusing light source having no directivity. The reflector 3 is used to give a directivity to such a stick-shaped light source. In such a case, however, a particular spread angle remains. In case of increasing the size of the device, it becomes possible to parallelize the light and bring the spread angle close to zero. However, in a case of achieving a reduction in the size of the device, a particular spread angle is unavoidable. Because such a spread angle adversely affects the optical filters, it is necessary to suppress the spread angle to a minimum by the time when the light enters the optical filters. In the present embodiment, the spread angle is suppressed by using reflectors and taper couplers.

The halogen light source 2 is provided inside the reflector 3 and irradiates xenon light (the second light) having a predetermined emission spectrum. In the present embodiment, the halogen light source 2 is a stick-shaped halogen lamp which extends in a depth direction perpendicular to a paper surface on which Fig. 2 is illustrated. One halogen light source 2 or a plurality of halogen light sources 2 can be provided. The reflector 4 has a bell-shaped cross section and converges light irradiated by the halogen light source 2 towards a light emission surface. One end of the taper coupler 6 is connected to the light emission surface of the reflector 4. Accordingly, the reflector 4 guides, as it is, the light from the halogen light source 2 toward the one end of the taper coupler 6.

Further, because of reasons similar to those of the xenon light source, the halogen light source is a stick-shaped diffusing light source having no directivity. As such, the reflector 4 and the taper coupler 6 are used to give a directivity to such a stick-shaped light source.

As shown in Figs. 1 and 2, the taper coupler 5 is made from a light-guiding body, is long and thin, and has an incident surface and an emission surface. The taper coupler 5 guides toward the outgoing surface xenon light which has entered the incident surface. In this case, the taper coupler 5 acts as means for controlling the directivity of the xenon light, which is similar to the reflector 3.

The taper coupler 6 is made from a light-guiding body, is long and thin, and has an incident surface and an emission surface. The taper coupler 6 is provided so as to be parallel to the taper coupler 5, and guides toward the outgoing surface halogen light which has entered the incident surface. In this case, the taper coupler 6 acts as means for controlling the directivity of the halogen light, which is similar to the reflector 4.

According to the present embodiment, the first light source is the stick-shaped xenon lamp and the second light source is the stick-shaped halogen lamp. The present embodiment, however, is not limited to this. For example, line-shaped light sources or other shaped xenon lamps can be used as the first light source, and line-shaped light sources or other shaped halogen lamps can be used as the second light source. Instead, LED light sources can be used as the first light source and the second light source.

### (Structures of Taper Couplers 5 and 6)

A structure of the taper coupler 5 and a structure of the taper coupler 6 are shown in Fig. 3. Fig. 3 illustrates how the taper coupler 5 and the taper coupler 6 are configured. As shown in Fig. 3, the taper coupler 5 is configured so that a width of the light guide (cross section area parallel to a minor axis direction of the taper coupler 5) increases gradually from one end (incident surface) to the other end (emission surface). Although the xenon light that has just entered the emission surface of the taper coupler 5 is converged by the reflector 3, the light thus converged has a large spread angle. However, since the taper coupler 5 is configured as shown in Fig. 3, the taper coupler 5 causes the spread angle of the light to change and fall within a given range while the light is passing through the taper coupler 5. As such, the light is controlled to have a minimum spread angle.

The taper coupler 6 is also configured so that a width of the light guide (cross section area parallel to a minor axis direction of the taper coupler 6) increases gradually from one end (incident surface) to the other end (emission surface). Although the halogen light that has just entered the emission surface of the taper coupler 6 is converged by the reflector 4, the light thus converged has a large spread angle. However, the taper coupler 6 causes the spread angle of the light to change and fall within a given range while the light is passing through the taper coupler 6. As such, the light is controlled to have a minimum spread angle.

### (Reflection of Xenon Light)

Two optical filters are provided at the other end (the emission surface) of the taper coupler 5. One of the two optical filters is the air mass filter 20, while the other is the sharp cut filter 22 (i.e. at least an optical filter with a characteristic in which light having longer-wavelengths is eliminated from the first light) which cuts off components having a wavelength of not less than a certain wavelength. The two optical filters are provided so as to be parallel to each other. It must be noted that the number of the optical filters is not restricted to two, and thus that two or more optical filters can be provided. In such a case, the sharp cut filter 22 out of the two or more optical filters is preferably provided, so as to be the closest (closest side) one to the xenon light source 1. This makes it possible to prevent a degradation of the air mass filter 20 caused by the heat from the xenon light source 1.

While a more detailed description will be given later, the wavelength selection mirror 7 selects and combines (i) light, having shorter-wavelengths than a predetermined boundary wavelength, in the xenon light whose emission spectrum has been adjusted, (ii) light, having longer-wavelengths than a predetermined boundary wavelength, in the halogen light whose emission spectrum has been adjusted. Note that it is also possible to use a cold mirror as the wavelength selection mirror 7. The sharp cut filter 22 is able to remove light, having longer-wavelengths than a predetermined boundary wavelength, in the xenon light which has entered the sharp cut filter 22. The wavelength selection mirror 7 preferably has a boundary wavelength which is identical to that of the sharp cut filter 22. Accordingly, the xenon light emitted from the sharp cut filter 22 has no energy corresponding to the longer-wavelengths than the boundary wavelength.

The xenon light enters the sharp cut filter 22 at an incident angle of substantially 0°. Accordingly, the characteristic of the sharp cut filter 22 is not affected by angular dependence to the incident angle. Therefore, the sharp cut filter 22 certainly cuts off light components having longer-wavelengths than the boundary wavelength as designed.

The xenon light emitted from the sharp cut filter 22 enters the air mass filter 20. The air mass filter 20 has a transmittance characteristic optimized for the emission spectrum of the xenon light. This causes the emission spectrum of the xenon light which entered the air mass filter 20 to be adjusted.

The xenon light which has passed through the air mass filter 20 is directed towards the wavelength selection mirror 7, which is provided so as to be at an angle of 45° with the air mass filter 20. The wavelength selection mirror 7 reflects the xenon light having longer-wavelengths, and then guides it to one end (incident surface) of the taper member 8.

### (Reflection of Halogen Light)

The reflection mirror 10 is provided at one end (emission surface) of the taper coupler 6. The reflection mirror 10 is a type of prism and reflects, with its internal reflection, all incident light towards the wavelength selection mirror 7. The reflection mirror 10 uses the internal reflection, and therefore the halogen light keeps its directivity before it enters the reflection mirror 10 and after it is emitted from the reflection mirror 10.

A plurality of optical filters are provided on an emission surface side of the reflection mirror 10. One of the plurality of optical filters is the heat ray cut filter 26, while the other of the plurality of optical filters is the air mass filter 20. The heat ray cut filter 26 cuts off the heat ray components having longer-wavelengths in the emission spectrum of the incident halogen light. The air mass filter 24 has a transmittance characteristic optimized for the emission spectrum of the halogen light. This causes the emission spectrum of the halogen light emitted from the heat ray cut filter 26 to be adjusted.

The halogen light which passed through the air mass filter 24 is directed toward the wavelength selection mirror 7. The wavelength selection mirror 7 transmits light, having longer-wavelengths, in the halogen light emitted from the air mass filter 24, and guides it toward the taper member 8.

As above, the xenon light and the halogen light are combined and enter the taper member 8 via the selections of the wavelength selection mirror 7. Specifically, (i) the light, having shorter-wavelengths, in the xenon light and (ii) the light, having longer-wavelengths, in the halogen light are selected by the wavelength selection mirror 7, are combined to become combined light, and are guided toward the incident surface of the taper member 8.

In the present embodiment, the boundary wavelength of the wavelength selection mirror 7 is 750 nm. Accordingly, the wavelength selection mirror 7 selects light having wavelengths of 750 nm or below as the xenon light having shorter-wavelengths. The wavelength selection mirror 7 selects light having wavelengths of 750 nm or above as the halogen light having longer-wavelengths. By selecting the light having wavelengths of 750 nm or below, it is possible to eliminate intense bright line components included in the emission spectrum of light irradiated by the xenon light source 1. This brings about the effect of facilitating the design of the first optical filter, especially the air mass filter 24. Note, however, that the boundary wavelength differs depending on the type of light source. For example, as shown in (b) of Fig. 5, some type of xenon light has bright lines whose wavelengths fall within a range from 550 nm to 700 nm. In this case, the boundary wavelength is preferably set to 550 nm. The boundary wavelength is preferably set to 450 nm, in a case where it is intended to eliminate bright lines existing around 490 nm so as to increase a degree of conformity of the spectrum. In view of the circumstances, it is preferable to set the boundary wavelength to fall within a range from 450 nm to 750 nm, in accordance with the bright lines of the xenon light.

### Details of the taper member 8

The taper member 8 is made from a light guide, and is configured so that a width of the light guide (minor axis of the taper coupler 8) decreases gradually from one end (incident surface) to the other end (emission surface). In other words, the taper member 8 has a cross section area parallel to the minor axis direction of the taper member 8 which gradually decreases from the incident surface to the emission surface.

While the width of the light guide diminishes rectilinearly for example in Fig. 2, the present embodiment is not limited to this. Therefore, a diminution along a curve or a diminution along a staircase pattern are also possible. In any case, a width (area) of the incident surface of the taper member 8 becomes larger than a width (area) of the emission surface.

The light which has entered the taper member 8 is directed forward while being repeatedly reflected inside the taper member 8. Such repeated reflections cause a change in distribution of the directivity of the light that has passed through the taper member 8. Both the directivity of the xenon light and the directivity of the halogen light change because the composite light of the xenon light and the halogen light enters the taper member 8. As a result, the directivity of the xenon light and the directivity of the halogen light substantially become identical with each other.

With the present embodiment, one end of the light guiding plate 9, serving as light irradiation means, is connected to the emission surface of the taper member 8. The light guiding plate 9, serving as the light irradiation means, is provided to convert the light emitted from the taper member 8 into planar light. Accordingly, the composite light, emitted from the taper member 8, in which the directivities of the xenon light and the halogen light are identical to each other is guided toward inside the light guiding plate 9. As a result, the simulated solar light irradiation device 30 is able to irradiate the irradiation surface 12 with the two lights which have passed through the respective different optical systems and whose directivities are identical to each other. Thus, it is possible to increase an irradiation distribution uniformity of the light with which the irradiation face 12 is irradiated. In addition, it is possible to achieve a better effect as compared to the case where it is intended to increase a uniformity of the irradiation by merely optimizing the scattering groove 11. It is further possible to much more improve the uniformity of the irradiation distribution by combining (i) optimization of a pitch and a shape of the scattering groove 11 with (ii) the use of the taper member 8 of the present invention.

In the present embodiment, the irradiation surface 12 is irradiated with the composite light of the xenon light and the halogen light by the provision of the scattering groove 11 on the light guiding plate 9. The present embodiment is, however, not limited to this. A scattering member can be used in place of the scattering track 11. For example, in place of the scattering groove 11, a scatterer can be used which is obtained by printing (applying) a linear pattern or a random pattern on a surface of the light guiding body 9. Instead, a configuration can be used in which protrusions and recesses are provided on the surface of the light guiding plate 9; in this case, such a configuration can be achieved by, for example, a configuration in which a plurality of lumps made from beaded ink are formed on the surface of the light-guiding body 9. The plurality of lumps serve as scatterers which scatters the incident light.

### (Function and Effect of the Present Embodiment)

The xenon light that has passed through the sharp cut filter 22 has no light having longer-wavelengths. As a result, the xenon light having no longer-wavelengths enters the wavelength selection mirror 7. Note that unnecessary spectrum of the longer-wavelengths than the boundary wavelength has already been removed from the xenon light which enters the wavelength selection mirror 7. Accordingly, the light emitted from the wavelength selection mirror 7 will never contain unnecessary spectrum. Further, even in a case in which the reflectivity of light having longer-wavelengths than the actual boundary wavelength becomes larger than a designed one, no adverse affect occurs because there is essentially no wavelength which is to be the reflection.

The above effect becomes clear when comparing (a) and (b) of Fig. 4. Note that (a) of Fig. 4 illustrates a case in which no sharp cut filter 22 was provided, whereas (b) of Fig. 4 illustrates a case in which the sharp cut filter 22 was provided. According to the present embodiment, no sharp cut filter is provided for the halogen light. In a case of employing a sharp cut filter which cuts off the light having shorter-wavelengths, it becomes possible to infallibly eliminate unnecessary noise components, which is similar to the effect illustrated in Fig. 4.

The wavelength selection mirror 7 is able to select and emit (combine) the light having shorter-wavelengths than the designed boundary wavelength in the xenon light which entered the wavelength selection mirror 7. Accordingly, the simulated solar light irradiation device in accordance with the present embodiment can irradiate the irradiation surface with the simulated solar light, as designed.
(a) of Fig. 5 illustrates the emission spectrum of the halogen light; (b) of Fig. 5 illustrates the emission spectrum of the xenon light. As shown in (b) of Fig. 5, there exist intense bright lines in the emission spectrum of the xenon light obtained before the xenon light enters the sharp cut filter 22.
(a) of Fig. 6 illustrates transmittance of the second optical filter; (b) of Fig. 6 illustrates transmittance of the first optical filter. As shown in (b) of Fig. 6, the first optical filter, which includes the sharp cut filter 22, is designed so that its transmittance causes substantially no bright line having a longer-wavelength to appear. The simulated solar light irradiation device 30 selects and combines (i) light, having longer-wavelengths, which is obtained by multiplying the emission spectrum of the halogen light illustrated in (a) of Fig. 5 by the transmittance of the second optical filter illustrated on (a) of Fig. 6, and (ii) light, having shorter-wavelengths, obtained by multiplying the emission spectrum of the xenon light illustrated in (b) of Fig. 5 by the transmittance of the first optical filter illustrated on (b) of Fig. 6. The combined light thus obtained is irradiated as simulated solar light having an emission spectrum shown in Fig. 7 by the simulated solar light irradiation device 30. Fig. 7 illustrates the emission spectrum of the simulated solar light irradiated by the simulated solar light irradiation device 30. It is clear from Fig. 7 that the emission spectrum has no bright line, as designed.

### (Sharp Cut Filter 28)

Fig. 8 is a partially enlarged view of the simulated solar light irradiation device 30 in accordance with an embodiment of the present invention. In an example shown in Fig. 8, three optical filters (i.e., the heat ray cut filter 26, the air mass filter 24, and a sharp cut filter 28) are provided on an emission surface side of the reflection mirror 10. The sharp cut filter 28 has a characteristic in which light, having shorter-wavelengths than a predetermined boundary wavelength, in the halogen light which has entered the sharp cut filter 28 is cut off. The boundary wavelength (750 nm) is identical to that of the wavelength selection mirror 7.

The halogen light enters the sharp cut filter 28 at an incident angle of substantially 0°. Accordingly, the characteristic of the sharp cut filter 28 is not affected by angular dependence to the incident angle. Therefore, the sharp cut filter 28 certainly cuts off light components having longer-wavelengths than the boundary wavelength as designed.

The halogen light that has passed through the sharp cut filter 28 has no light having shorter-wavelengths than the boundary wavelength. Accordingly, it is possible to improve performance of the simulated solar light irradiated by the simulated solar light irradiation device 30. This is because it is possible to (i) cut off the bright lines, having respective longer-wavelengths, in the xenon light and (ii) infallibly cut off a noise, having shorter-wavelength, which is contained in the halogen light.

### (Optical Systems)

Note that the simulated solar light irradiation device 30 is provided with first and second sets of optical systems, each set including a xenon light optical system and a halogen light optical system (see Fig. 2). The first set is provided at one end (the left side in Fig. 2) of a housing of the simulated solar light irradiation device 30, and the second set is provided at the other end (the right side in Fig. 2) of housing. The light emitted from the first set enters one end of the light guiding plate 9, and the light emitted from the second set enters the other end of the light guiding plate 9. As such, it is possible to further increase an intensity of the simulated solar light irradiated by the simulated solar light irradiation device 30.

Note also that in one of the first and second sets, the position of the xenon light optical system and the position of the halogen light optical system can be changed to be opposite to those in the configuration shown in Fig. 2. In such a case, the wavelength selection mirror 7 reflects the halogen light, having longer-wavelengths, which enters the wavelength selection mirror 7 via the air mass filter 20, and guides it to the taper member 8. The wavelength selection mirror 7 transmits the xenon light, having shorter-wavelengths, which enters the wavelength selection mirror 7 via the air mass filter 24, and guides it to the taper member 8. In other words, the wavelength selection mirror 7 needs to reflect or transmit (i) the xenon light having shorter-wavelengths and (ii) the halogen light having longer-wavelengths.

The irradiation surface 12 extends to have a certain area in the depth direction perpendicular to the paper surface on which Fig. 2 is illustrated. It is possible to provide another simulated solar light irradiation device 30, by arranging a plurality of optical system sets in the depth direction in accordance with the area of the irradiation face 12.

According to the simulated solar light irradiation device, the halogen light source is provided so that the halogen light enters the wavelength selection mirror through the reflection mirror. The present embodiment is, however, not limited to this. For example, it is possible to configure the simulated solar light irradiation device so that no reflection mirror is included. In other words, it is possible to reduce a distance between the light source and the wavelength selection mirror, by providing a taper coupler, which controls the directivity of light, in at least one of the halogen light source and the xenon light source. This in turn makes it possible to reduce the size of the simulated solar light irradiation device.

### (Other Configurations)

The present invention can also be defined as follows.

The feature of a simulated solar light irradiation device, which irradiates an irradiation surface with simulated solar light, resides in including: a xenon light source irradiating a xenon light; means for controlling a directivity of diffused light irradiated by the xenon light source; a first optical filter which adjusts an emission spectrum of the xenon light whose directivity has been controlled; means for controlling a directivity of diffused light irradiated by a halogen light source which irradiates halogen light, and for controlling a directivity of diffused light irradiated by the halogen light source; a second optical filter which adjusts an emission spectrum of the halogen light whose directivity has been controlled; and light selection means for selecting and emitting (i) light, having shorter-wavelengths, in the xenon light whose emission spectrum has been adjusted and (ii) light, having longer-wavelengths, in the halogen light whose emission spectrum has been adjusted, the first optical filter being made up of at least two optical filters, one of the two optical filters cutting off light having longer-wavelengths than a boundary wavelength of the light selection means.

The present invention can also be configured as follows.

The feature of a simulated solar light irradiation device resides in including: a light source section including first and second light sources (1, 2); light selection means (7) for selecting and emitting (i) light, having shorter-wavelengths than a predetermined boundary wavelength, in the first light irradiated by the first light source and (ii) light, having longer-wavelengths than a predetermined boundary wavelength, in the second light irradiated by the second light source; and control means (5, 6) for controlling a directivity of the first light or a directivity of the second light so that the first light or the second light enters the light selection means 7 at a predetermined incident angle.

As above, a simulated solar light irradiation device in accordance with the present invention, which irradiates simulated solar light by causing light selection means to combine (i) first light which is irradiated by a first light source and has a predetermined spectral distribution and (ii) second light which is irradiated by a second light source and has a spectral distribution different from that of the first light, so as to prepare the simulated solar light characterized in that the first light or the second light is given a directivity so as to control an incident angle of the first light or the second light which enters the light selection means at a predetermined incident angle.

The predetermined boundary wavelengths preferably fall within a range from 450 nm to 750 nm. With the above configuration, in a case where intense bright lines are included in the emission spectrum of the first light having wavelengths above a range from 450 nm to 750 nm, it is possible to eliminate the such intense bright lines. This makes it possible to obtain simulated solar light having an emission spectrum similar to the emission spectrum of the standard solar light.

The simulated solar light irradiation device preferably includes light irradiation means for irradiating an object to be irradiated with planer light to which the light emitted from the light selection means is converted. This makes it possible to easily irradiate the planer simulated solar light.

Further, a simulated solar light irradiation device in accordance with the present invention is characterized in including: a light source section including first and second light sources; light selection means for selecting emitting (i) light, having shorter-wavelengths than a predetermined boundary wavelength, in the first light irradiated by the first light source and (ii) light, having longer-wavelengths than a predetermined boundary wavelength, in the second light irradiated by the second light source; and control means for controlling a directivity of the first light or a directivity of the second light so that the first light or the second light enters the light selection means at a predetermined incident angle.

The control means has preferably a taper-shaped optical element whose width gradually increases from an incident surface of the first light and of the second light to an emission surface from which the light that has entered the incident surface is emitted.

With the configuration, since such a taper-shaped optical element whose width gradually increases from the incident surface to the emission surface is used, it is possible to adjust a directivity of light while the light is propagating the optical element. Other control means which can be used include a light-guiding body and/or a lens.

The simulated solar light irradiation device in accordance with the present invention is characterized by further including adjustment means for adjusting an emission spectrum of the first light or of the second light.

With the configuration, it is possible to adjust the emission spectrum of light from each light source. As such, it is possible to cause the emission spectrum of the simulated solar light to be similar to that of the standard solar light.

The adjustment means is characterized in that it includes at least an optical filter which eliminates light having longer-wavelengths from the first light.

With the configuration, the light having longer-wavelengths is eliminated from the first light, and therefore it becomes easy to design the light selection means.

The optical filter that has a characteristic in which the light having longer-wavelengths is eliminated from the first light is provided on one of the adjustment means side which one is the closest to the first light source.

With the configuration, it is possible to first eliminate light elements having longer-wavelengths (such as infrared light). This causes heat to be unlikely to propagate to other optical filters, and therefore it becomes easier to design the other optical filters.

Further, a simulated solar light irradiation method in accordance with the present invention comprises the steps of: irradiating (i) first light, emitted from a first light source, whose directivity has been controlled and (ii) second light, emitted from a second light source, whose directivity has been controlled; and selecting and irradiating (i) light, having shorter-wavelengths than a predetermined boundary wavelength, in the first light and (ii) light, having longer-wavelengths than a predetermined boundary wavelength, in the second light.

The detailed explanations of the invention which were given above in connection with concrete embodiments and examples are merely intended to clarify the technical contents of the present invention. The present invention should not be construed to be limited to these examples and embodiments, and various modifications can be exercised within the spirit of the invention and the scope of the following claims.

### Industrial Applicability

The present invention can be applied to inspection, measurement, and testing of solar batteries. Further, the present invention can also be applied to color fading tests and fading resistance tests for cosmetics, paint, adhesive materials, or any type of material. In addition, the present invention can also be applied to inspection and testing of photocatalysts, as well as to any other type of testing in which natural light is required.

### Reference Signs List

- 1: xenon light (first light)
- 2: halogen light (second light)
- 3: reflector
- 4: reflector
- 5: taper coupler (control means)
- 6: taper coupler (control means)
- 7: wavelength selection mirror (light selection means)
- 8: taper member (light propagation means)
- 9: light-guiding body (light irradiation means)
- 10: reflection mirror
- 11: scattering groove (light reflection means)
- 12: irradiation surface
- 14: light reflecting member
- 15: reflection mirror
- 20: air mass filter (adjustment means)
- 22: sharp cut filter (adjustment means)
- 24: heat ray cut filter (adjustment means)
- 26: air mass filter (adjustment means)
- 28: sharp cut filter (adjustment means)
- 30: simulated solar light irradiation device

## Claims

1. A simulated solar light irradiation device, which irradiates simulated solar light by causing light selection means to combine (i) first light which is irradiated by a first light source and has a predetermined spectral distribution and (ii) second light which is irradiated by a second light source and has a spectral distribution different from that of the first light, so as to prepare the simulated solar light,
the first light or the second light being given a directivity so as to control an incident angle of the first light or the second light that enters the light selection means at a predetermined incident angle.

2. A simulated solar light irradiation device, comprising:
a light source section including first and second light sources;
light selection means for selecting and emitting (i) light, having shorter-wavelengths than a predetermined boundary wavelength, in the first light irradiated by the first light source and (ii) light, having longer-wavelengths than a predetermined boundary wavelength, in the second light irradiated by the second light source; and
control means for controlling a directivity of the first light or a directivity of the second light so that the first light or the second light enters the light selection means at a predetermined incident angle.

3. The simulated solar light irradiation device according to claim 1 or 2, further comprising adjustment means for adjusting an emission spectrum of the first light or of the second light.

4. The simulated solar light irradiation device according to claim 3, wherein the adjustment means includes at least an optical filter which has a characteristic in which light, having longer-wavelengths, is eliminated from the first light.

5. The simulated solar light irradiation device according to claim 4, wherein the optical filter that has the characteristic in which the light having longer-wavelengths is eliminated from the first light is provided on one of the adjustment means side, the one being the closest to the first light source.

6. A simulated solar light irradiation method, comprising the steps of:
irradiating (i) first light, emitted from a first light source, whose directivity has been controlled and (ii) second light, emitted from a second light source, whose directivity has been controlled; and
selecting and irradiating (i) light, having shorter-wavelengths than a predetermined boundary wavelength, in the first light and (ii) light, having longer-wavelengths than a predetermined boundary wavelength, in the second light.
